# EUROPÄISCHE PATENTANMELDUNG

(11) **EP 3 771 846 A1**
(43) Veröffentlichungstag der Anmeldung: **03.02.2021**
(21) Anmeldenummer: 19188795.9
(22) Anmeldetag: 29.07.2019
(51) Int. Cl.: F16F 15/02

(54) **MECHANISCHES KOPPLUNGSSYSTEM ZUR SCHWINGUNGSISOLIERENDEN KOPPLUNG ZWEIER TEILSYSTEME**

(71) Anmelder: Siemens Aktiengesellschaft, 80333 München (DE)
(72) Erfinder: Bachmaier, Georg, 80469 München (DE); Gerlich, Matthias, 80636 München (DE); Vontz, Thomas, 81539 München (DE)

(57) **Zusammenfassung**

Es wird ein mechanisches Kopplungssystem (1) zur schwingungsisolierenden Kopplung zwischen einem ersten und einem zweiten mechanischen Teilsystem entlang einer zentralen Kopplungsachse (A) angegeben. Das Kopplungssystem umfasst
- ein erstes Verbindungselement (3a) zur Verbindung mit dem ersten mechanischen Teilsystem,
- ein zweites Verbindungselement (3b) zur Verbindung mit dem zweiten mechanischen Teilsystem,
- wenigstens ein Hauptfederelement (7), welches zur Federung von axialen Relativbewegungen der beiden Teilsysteme entlang der Kopplungsachse A ausgelegt ist,
sowie
- ein mechanisch zu dem wenigstens einen Hauptfederelement (7) in Serie geschaltetes laterales Ausgleichssystem (11) mit
- einem zentralen Ankerelement (5b)
- einem Kippelement (13), welches eine Kippstange (13a) umfasst, die über ein Kugelgelenk (15) lateral kippbar mit dem zentralen Ankerelement (5b) verbunden ist, wobei die Kippstange (13a) bei einer zentralen Grundstellung des Kugelgelenks (15) entlang der Kopplungsachse A ausgerichtet ist,
- einem äußeren Ankerelement (3b)
- und mit einer Mehrzahl n von Seilabschnitten (17) oder beweglich gelagerten Stangen, mit denen das Kippelement (13) derart lateral gegen das äußere Ankerelement (3b) abgespannt ist, dass eine Verkippung des Kippelements (13) in einer lateralen Relativbewegung zwischen dem zentralen Ankerelement (5b) und dem äußeren Ankerelement (3b) resultiert.

## Beschreibung

Die vorliegende Erfindung betrifft ein mechanisches Kopplungssystem zur schwingungsisolierenden Kopplung zweier Teilsysteme entlang einer zentralen Kopplungsachse A mit wenigstens einem Hauptfederelement, welches zur Federung von axialen Relativbewegungen der beiden Teilsysteme entlang der Kopplungsachse A ausgelegt ist.

Aus dem Stand der Technik sind zahlreiche unterschiedliche mechanische Kopplungssysteme bekannt, mit denen zwei mechanische Teilsysteme federnd (und somit schwingungsisolierend) miteinander gekoppelt werden können. Insbesondere bei Fahrzeugen finden sich solche federnden Kopplungssysteme in den Fahrwerken (zwischen Radachse und Fahrgestell), zum Teil aber auch als schwingungsisolierende Aufhängung zwischen Motor und Fahrgestell. Auch bei der Lagerung einzelner Maschinen innerhalb eines Maschinenaggregats kommen solche schwingungsisolierenden Kopplungen zum Einsatz.

Viele der bekannten schwingungsisolierenden Kopplungssysteme weisen Federelemente auf, welche vor allem zur Federung von axialen Relativbewegungen ausgelegt sind. Solche Federelemente sind beispielsweise Gasdruckfedern, welche mit oder ohne ein zusätzliches Flüssigkeitsvolumen ausgeführt sein können. Bei diesen ist die Federwirkung auf eine axiale Richtung beschränkt, nämlich typischerweise auf die Richtung, entlang derer ein Kolben innerhalb eines Zylinders beweglich angeordnet ist. Auch Schraubenfedern kommen häufig zum Einsatz, wobei auch hier die hauptsächliche Federwirkung in der Richtung entlang der Federachse erreicht wird und nur eine deutlich geringere Federung beziehungsweise Ausgleichsbewegung in den lateralen Richtungen (also senkrecht zur Federachse) möglich ist. Es existieren jedoch zahlreiche Anwendungen, bei denen nicht nur eine Federung entlang einer Achse (meist der Verbindungsachse zwischen den beiden zu koppelnden Elementen), sondern auch eine Federung oder zumindest eine Ausgleichsbewegung entlang einem oder mehrerer laterale Freiheitsgrade benötigt wird.

Gasdruckfedern weisen eine Vielzahl von Vorteilen auf, welche vor allem bei der Federung von Fahrzeugteilen beziehungsweise bei der Federung von Maschinen in Maschinenaggregaten zum Einsatz kommen können: so weisen sie häufig eine besonders hohe Leistungsdichte auf, wodurch im Vergleich zu vielen anderen Federsystemen Gewicht eingespart werden kann. Außerdem kann die Steifigkeit der Gasfeder über den Druck eingestellt werden. Allerdings sind Gasdruckfedern nicht dazu geeignet, laterale Bewegungen auszugleichen beziehungsweise abzufedern. Daher existiert ein Bedarf für ein mechanisches Kopplungssystem, welches neben einer axialen Federung auch eine laterale Ausgleichsbewegung ermöglicht.

Aufgabe der Erfindung ist es daher, ein mechanisches Kopplungssystem anzugeben, welches die genannten Nachteile überwindet. Insbesondere soll ein Kopplungssystem zur Verfügung gestellt werden, welches sowohl eine axiale Federung entlang der zentralen Kopplungsachse als auch eine laterale Ausgleichsbewegung in wenigstens einer Raumrichtung senkrecht dazu ermöglicht.

Diese Aufgabe wird durch das in Anspruch 1 beschriebene mechanische Kopplungssystem gelöst. Das erfindungsgemäße mechanische Kopplungssystem dient zur schwingungsisolierenden Kopplung zwischen einem ersten und einem zweiten mechanischen Teilsystem entlang einer zentralen Kopplungsachse A. Das Kopplungssystem umfasst ein erstes Verbindungselement zur Verbindung mit dem ersten mechanischen Teilsystem und ein zweites Verbindungselement zur Verbindung mit dem zweiten mechanischen Teilsystem. Weiterhin umfasst das Kopplungssystem ein Hauptfederelement, welches zur Federung von axialen Relativbewegungen der beiden Teilsysteme entlang der Kopplungsachse A ausgelegt ist. Zusätzlich umfasst das mechanische Kopplungssystem ein laterales Ausgleichssystem, welches mechanisch zu dem wenigstens einen Hauptfederelement in Serie geschaltet ist. Das Ausgleichselement umfasst ein zentrales Ankerelement, das insbesondere im Bereich der zentralen Kopplungsachse angeordnet ist. Das Ausgleichssystem umfasst ferner ein Kippelement mit einer Kippstange, die über ein Kugelgelenk lateral kippbar mit dem zentralen Ankerelement verbunden ist. Dabei ist die Kippstange bei einer zentralen Grundstellung des Kugelgelenks entlang der zentralen Kopplungsachse A ausgerichtet. Weiterhin umfasst das laterale Ausgleichssystem ein äußeres Ankerelement und eine Mehrzahl n von Seilabschnitten oder beweglich gelagerten Stangen, mit denen das Kippelement derart lateral gegen das äußere Ankerelement abgespannt ist, dass eine Verkippung des Kippelements in einer lateralen Relativbewegung zwischen dem zentralen Ankerelement und dem äußeren Ankerelement resultiert.

Unter einer schwingungsisolierenden Kopplung soll hier allgemein eine Kopplung zweier Teilsysteme verstanden werden, bei denen die Bewegungen eines Teilsystems nicht starr auf das jeweils andere Teilsystem übertragen werden. Mit anderen Worten soll hierunter eine bewegliche und insbesondere federnde Kopplung der beiden Teilsysteme verstanden werden.

Unter der zentralen Kopplungsachse A soll hier allgemein die Achse verstanden werden, entlang derer die Kopplung der beiden Teilsysteme vermittelt wird. Vorteilhaft kann es sich dabei um eine Symmetrieachse des Kopplungssystems handeln; dies ist jedoch nicht notwendigerweise der Fall. In jedem Fall soll diese Achse A jedoch zentral angeordnet sein, in dem Sinne, dass das Zentrum der verbindenden Elemente des Kopplungssystems (also insbesondere sowohl des Hauptfederelements als auch des lateralen Ausgleichssystems) auf dieser Achse A liegt.

Die beiden genannten Verbindungselemente dienen der mechanischen Verbindung mit den beiden zu koppelnden Teilsystemen. Es kann sich dabei also beispielsweise um Verbindungsstücke handeln, mit denen die jeweiligen zu koppelnden Teilsysteme mechanisch fest verbunden werden können. Dabei müssen die zu koppelnden Teilsysteme nicht Bestandteile des erfindungsgemäßen Kopplungssystems sein, sondern nur die mechanischen Schnittstellen in Form der genannten Verbindungselemente.

Das wenigstens eine Hauptfederelement dient zur Federung der axialen Relativbewegungen, also mit anderen Worten derjenigen Bewegungen, die einer Vergrößerung oder Verkleinerung des Abstands der beiden Teilsysteme entsprechen. Insbesondere kann das wenigstens eine Hauptfederelement überwiegend oder sogar im Wesentlichen ausschließlich zur Federung solcher axialer Relativbewegungen ausgelegt sein. Eine laterale Beweglichkeit dieses Hauptfederelements wird nicht benötigt.

Das laterale Ausgleichssystem dient dazu, zusätzlich zu diesen axialen Relativbewegungen auch laterale Relativbewegungen zwischen den beiden Teilsystemen zu ermöglichen. Unter einer lateralen Relativbewegung soll hier allgemein eine Bewegung in einer Raumrichtung senkrecht zur zentralen Kopplungsachse A verstanden werden. Wenn in einem kartesischen Koordinatensystem die Richtung der Kopplungsachse A mit der z-Richtung übereinstimmt, entsprechen die lateralen Bewegungen also den Bewegungen in x- und/oder y-Richtung. Das laterale Ausgleichssystem soll also eine Beweglichkeit in wenigstens einer dieser lateralen Richtungen ermöglichen. Besonders bevorzugt ist allerdings eine translatorische Beweglichkeit in allen lateralen Richtungen, also für alle möglichen Richtungskombinationen, welche aus Bewegungen in x- und y-Richtung resultieren. Bezüglich der zentralen Achse A können diese lateralen translatorischen Freiheitsgrade auch allgemein als radiale Richtungen bezeichnet werden.

Unter der genannten Eigenschaft, dass die Kippstange über das Kugelgelenk "lateral kippbar" ist, soll hier verstanden werden, dass die Kippstange aus der Grundstellung - also der Richtung der zentralen Achse A - heraus in Richtung der x- und/oder y-Achse kippbar ist. Die Längsrichtung der Kippstange muss bei einer solchen Verkippung die Richtung der x- bzw. y-Achse nicht erreichen, es genügt vielmehr ein leichtes Kippen in Richtung einer dieser Achsen. Das mit dem Kugelgelenk verbundene Ende (sowie das Kugelgelenk selbst) kann dabei vorteilhaft auf der zentralen Achse A verbleiben.

Durch die Tatsache, dass das Kippelement mit den Seilabschnitten oder beweglich gelagerten Stangen gegen das äußere Ankerelement abgespannt ist, wird eine mechanische Kopplung zwischen dem zentralen Ankerelement und dem äußeren Ankerelement erreicht. Die Abspannung mittels der Seilabschnitte oder Stangen ist "lateral", in dem Sinne, dass die Seilabschnitte oder Stangen in der Grundstellung zumindest eine laterale Richtungskomponente aufweisen sollen. Zusätzlich weisen sie aber insbesondere auch eine axiale Richtungskomponente auf, sodass sich die Seilabschnitte oder Stangen in der Grundstellung "schrägliegend radial" nach außen erstrecken, nach der Art der schrägliegend radialen Abspannung eines Mastes. Ähnlich wie bei diesem kann die Abspannung mittels der Mehrzahl n von Seilabschnitten oder Stangen vorteilhaft zentrosymmetrisch sein. Die Ankerpunkte, bei denen die Seilabschnitte oder Stangen jeweils mit dem Kippelement verbunden sind, müssen jedoch nicht auf der zentralen Achse liegen, sondern sie liegen vorteilhaft radial weiter außen, also insbesondere radial zwischen der Achse und dem äußeren Ankerelement.

Der Kerngedanke der vorliegenden Erfindung besteht darin, dass durch die mechanische Serienschaltung zwischen dem wenigstens einen Hauptfederelement und dem lateralen Ausgleichssystem vorteilhaft eine federnde Kopplung mit mehreren Freiheitsgraden für die Relativbewegung der Teilsysteme zur Verfügung gestellt wird. Dies wird gemäß der Erfindung durch eine Trennung der axialen Federung (mittels des wenigstens Hauptfederelements) und der lateralen Beweglichkeit (mittels des Ausgleichssystems) erreicht. Dies bewirkt den Vorteil, dass das wenigstens eine Hauptfederelement allein auf die axiale Federung hin optimiert werden kann. Die für die jeweilige Anwendung maßgeblichen Anforderungen an die axiale Federkonstante, die axiale Auslenkung und gegebenenfalls weitere Parameter können also optimal erfüllt werden, ohne bei dieser Komponente gleichzeitig auf eine gewünschte laterale Beweglichkeit Rücksicht nehmen zu müssen.

Umgekehrt kann in dem lateralen Ausgleichselement durch das zugrundeliegende Seilsystem eine gute laterale Beweglichkeit bei gleichzeitiger axialer Steifigkeit erreicht werden.

Insgesamt ermöglicht also die Serienschaltung der beiden unterschiedlichen Kopplungselemente - Hauptfeder(n) und Ausgleichssystem - daher eine Beweglichkeit entlang mehrerer Freiheitsgrade. Diese kann vor allem bei Verwendung von dünnen Seilquerschnitten mit einem vergleichsweise geringen Materialaufwand und geringer Gesamtmasse erreicht werden. Anstelle der Seilabschnitte können im Rahmen der Erfindung allgemein auch starre Stangen zum Einsatz kommen, welche an den beiden gegenüberliegenden Halterungspunkten mittels Gelenken beweglich gelagert sind. Unter dem Begriff "Seilabschnitt" soll daher hier allgemein auch eine solche beweglich gelagerte Stange verstanden werden, auch wenn dies nicht an jeder Stelle explizit erwähnt ist. Dies gilt zumindest für die Ausführungsformen, bei denen diese Seilabschnitte nicht ihrerseits Teil eines Flaschenzugsystems sind - bei denen sie also nicht zusätzlich um Umlaufrollen geführt werden.

Die zu koppelnden mechanischen Teilsysteme können dabei sehr allgemein unter einer Vielzahl von möglichen Anwendungen ausgewählt werden: Beispielsweise kann eines der Teilsysteme eine Radachse eines Fahrzeugs und das andere Teilsystem kann ein Fahrgestell eines Fahrzeugs sein. Bei einem weiteren Beispiel kann eines der Teilsysteme ein Motor und das andere ein Fahrgestell eines Fahrzeugs sein. Bei einem weiteren Beispiel kann eines der Teilsysteme eine Maschine sein, und das andere kann durch ein oder mehrere Bestandteile eines Maschinenaggregats oder sonstige Teile eines Antriebssystems gebildet sein. Bei einem weiteren Beispiel kann eines der Teilsysteme ein Windkraft-Generator sein, und das andere kann ein weiterer Teil einer Windkraft-Anlage sein. Bei einem weiteren Beispiel kann ein Teilsystem ein erdbebensicher gelagerter Gebäudeteil sein, und das andere Teilsystem kann ein weiterer Gebäudeteil oder ein Teil des Erdbodens sein. Bei allen genannten Beispielen ist grundsätzlich die Zuordnung als erstes bzw. zweites Teilsystem beliebig wählbar.

Vorteilhafte Ausgestaltungen und Weiterbildungen der Erfindung gehen aus den von Anspruch 1 abhängigen Ansprüchen sowie der folgenden Beschreibung hervor.

So kann das Kopplungssystem allgemein vorteilhaft zusätzlich ein oder mehrere Zwischenelemente aufweisen, welche mechanisch zwischen die beiden Verbindungselemente geschaltet sind. So ist es bei der beschriebenen Serienschaltung zweckmäßig, wenn wenigstens ein solches Zwischenelement mechanisch zwischen dem wenigstens einen Hauptfederelement und dem lateralen Ausgleichssystem angeordnet ist, um auf diese Weise die Serienschaltung zu vermitteln. Optional können auch mehrere solche Zwischenelemente zum Einsatz kommen, insbesondere wenn noch weitere Kopplungselemente zusätzlich zu den genannten Elementen mechanisch in Serie geschaltet sind (beispielsweise eine Notlauffeder).

Bei einer solchen Ausführungsform mit wenigstens einem Zwischenelement kann das zentrale Ankerelement des Ausgleichssystems vorteilhaft entweder das erste oder zweite Verbindungselement oder ein erstes oder zweites Zwischenelement sein. Mit anderen Worten kann dasjenige Ende des Ausgleichssystems, welches das Kugelgelenk trägt, entweder endständig am Kopplungssystem angeordnet sein (so dass es direkt mit einem der Teilsysteme verbunden werden kann) oder es kann bezüglich der Serienschaltung innenliegend verankert sein.

Alternativ oder zusätzlich kann das äußere Ankerelement des Ausgleichssystems vorteilhaft entweder das zweite Verbindungselement oder ein erstes oder zweites Zwischenelement sein. Mit anderen Worten kann dasjenige Ende des Ausgleichssystems, an welchem die radial außenliegenden Seilenden verankert sind, entweder endständig am Kopplungssystem angeordnet sein (so dass es direkt mit einem der Teilsysteme verbunden werden kann) oder es kann bezüglich der Serienschaltung innenliegend verankert sein. Dabei ist die erste Variante (endständige Anordnung) vor allem dann besonders bevorzugt, wenn das zentrale Ankerelement bezüglich der Serienschaltung innenliegend angeordnet ist. Umgekehrt ist die zweite Variante (innenliegende Anordnung des äußeren Ankerelements) vor allem dann besonders bevorzugt, wenn das zentrale Ankerelement bezüglich der Serienschaltung endständig angeordnet ist. Neben diesen beiden bevorzugten Kombinationen ist es aber beispielsweise auch denkbar und unter Umständen bevorzugt, wenn sowohl das zentrale Ankerelement als auch das äußere Ankerelement jeweils ein innenliegendes Zwischenelement bilden. Dies kann vor allem dann zweckmäßig sein, wenn neben dem wenigstens einen Hauptfederelement und dem Ausgleichssystem noch weitere Kopplungselemente mechanisch in Serie geschaltet sind, sodass es mehr als ein Zwischenelement im Kopplungssystem gibt.

Mit anderen Worten sind also alle möglichen Kombinationen für endständige beziehungsweise innenliegende Anordnungen der beiden genannten Ankerelemente denkbar - wobei lediglich auszuschließen ist, dass jedes der Ankerelemente ein endständiges Verbindungselement bildet, da bei dieser Konfiguration keine Serienschaltung mit einem Hauptfederelement mehr möglich wäre.

Allgemein vorteilhaft weist das zentrale Ankerelement einen zentralen Ankerpunkt auf, über welchen das Kippelement mit dem Kugelgelenk verbunden ist. Dieser zentrale Ankerpunkt liegt insbesondere im Zentrum des Kugelgelenks. In der Grundstellung liegt er auf der zentralen Achse A. Allgemein vorteilhaft weist das äußere Ankerelement eine Mehrzahl n von radial außenliegenden Ankerpunkten auf, welche jeweils mit den zugehörigen radial außenliegenden Enden der entsprechenden n Seilabschnitte oder Stangen verbunden sind.

Allgemein vorteilhaft weist das Kippelement zusätzlich eine Mehrzahl n von radial innenliegenden Ankerpunkten auf, welche jeweils mit den zugehörigen radial innenliegenden Enden der entsprechenden n Seilabschnitte oder Stangen verbunden sind. Diese radial innenliegenden Ankerpunkte liegen insbesondere nicht auf der zentralen Kopplungsachse A, sondern nur radial weiter innen als die vorab beschriebenen außenliegenden Ankerpunkte. Sie liegen somit radial zwischen dem zentralen Ankerpunkt und den außenliegenden Ankerpunkten. Besonders vorteilhaft sind die innenliegenden Ankerpunkte symmetrisch über den äußeren Umfang des Kippelements verteilt.

Allgemein kann das Kippelement zur Ausbildung der innenliegenden Ankerpunkte insbesondere eine Mehrzahl n von optionalen Kipparmen aufweisen, in deren Endbereichen diese Ankerpunkte angeordnet sind. Diese Kipparme können sich insbesondere in radialer Richtung von der Kippstange aus nach außen erstrecken. Es ist aber auch grundsätzlich eine schräge Ausrichtung denkbar, bei der die Kipparme sowohl eine radiale als auch eine axiale Richtungskomponente aufweisen.

Bei einer solchen Ausführungsform mit einer Mehrzahl n von Kipparmen ist es besonders vorteilhaft, wenn auch diese symmetrisch um die zentrale Kippstange herum angeordnet und mit dieser verbunden sind. Besonders zweckmäßig sind dann sowohl die Kipparme, als auch die Seilabschnitte, die innenliegenden Ankerpunkte und die außenliegenden Ankerpunkte nach Art einer strahlenförmigen Konfiguration symmetrisch um die zentrale Kopplungsachse A verteilt. Bei dieser Ausführungsform wird innerhalb der xy-Ebene eine besonders ausgeglichene laterale Beweglichkeit zwischen den beiden Teilsystemen erzielt.

Allgemein bevorzugt ist das laterale Ausgleichssystem derart ausgestaltet, dass bei einer lateralen Verkippung des Kippelements eine rückstellende Kraft zurück zur zentralen Stellung des Kugelgelenks resultiert. Mit anderen Worten werden bei dieser Ausführungsform die beiden Teilsysteme bei einer lateralen Auslenkung zurück in die zentrale Grundstellung gedrängt. Es handelt sich dann also nicht nur allgemein um ein lateral bewegliches Ausgleichssystem, sondern speziell um ein lateral federndes System. Die Stärke der lateralen Federung ist dabei durch die Höhe der rückstellenden Kraft für eine gegebene laterale Auslenkung bestimmt.

Bei Ausführungsformen mit einer lateralen rückstellenden Kraft kann diese prinzipiell auf unterschiedliche Weise erzeugt werden. Bevorzugt ist es, wenn die rückstellende Kraft aus einer übergeordneten anziehenden oder abstoßenden Kraft zwischen den beiden Teilsystemen erzeugt wird. Eine solche anziehende Kraft kann sich beispielsweise aus der auf die Teilsysteme einwirkenden Schwerkraft ergeben.

So können gemäß einer bevorzugten Ausführungsform die beiden Verbindungselemente geodätisch übereinanderliegend angeordnet sein. Dies kann insbesondere bewirken, dass im gekoppelten Zustand auch die beiden mechanisch gekoppelten Teilsysteme geodätisch übereinanderliegend angeordnet sind. Dies hat zur Folge, dass die auf die beiden zu koppelnden (bzw. gekoppelten) Teilsysteme einwirkende Schwerkraft eine Druckkraft zwischen den beiden Verbindungselementen bewirkt. Besonders bevorzugt ist dann das Ausgleichssystem so ausgestaltet, dass die lateral rückstellende Kraft aus dieser Druckkraft resultiert.

Unabhängig davon, ob eine solche Druckkraft aus der Schwerkraft oder aus einer anderen auf die beiden Teilsysteme einwirkenden Kraft erzeugt wird, kann mit dem Seilsystem des lateralen Ausgleichssystems auf relativ einfache Weise eine rückstellende Kraft aus der Druckkraft erzeugt werden. Hierzu müssen nur die Abmessungen der Seilabschnitte und Kipparme und die Lage der beschriebenen (zentralen, innenliegenden und außenliegenden) Ankerpunkte so bemessen sein, dass bei einer lateralen Verkippung des Kippelements eine Vergrößerung des axialen Abstands der beiden gekoppelten Verbindungselemente resultiert. Mit anderen Worten bilden dann die Kurven, auf denen sich die außenliegenden Ankerpunkte bewegen können, und welche durch die genannten geometrischen Parameter eindeutig bestimmt sind, für jeden außenliegenden Ankerpunkt bevorzugt eine nach oben gekrümmte Bewegungskurve. Solche nach oben gekrümmten Bewegungskurven sind allgemein vor allem dann bevorzugt, wenn das äußere Ankerelement (entweder direkt oder indirekt über weitere Kopplungselemente) mit dem jeweils geodätisch obenliegenden Verbindungselement verbunden ist. Dann bewirkt nämlich die Schwerkraft eine rückstellende Kraft in Richtung des untenliegenden Minimums der nach oben gekrümmten Bewegungskurve.

Anders ausgedrückt weist das äußere Ankerelement des Kopplungssystems vorteilhaft eine Mehrzahl n von radial außenliegenden Ankerpunkten auf, welche mit den radial außenliegenden Enden der n Seilabschnitte verbunden sind. Diese außenliegenden Ankerpunkte sind durch die Verspannung der Seilabschnitte jeweils auf Bewegungsbahnen bewegbar, welche derart konvex gekrümmt sind, dass durch jede Kippbewegung aus der zentralen Grundstellung des Kugelgelenks der axiale Abstand zwischen den beiden Verbindungselementen vergrößert wird.

Verallgemeinert kann daher gesagt werden, dass die Bewegungskurven der außenliegenden Ankerpunkte vorteilhaft von dem gegenüberliegenden Verbindungselement weg gekrümmt sind, falls eine anziehende Druckkraft zwischen den beiden Verbindungselementen wirkt. Als "gegenüberliegendes Verbindungselement" wird dabei das Verbindungselement bezeichnet, welches (direkt oder indirekt) mit dem zentralen Ankerelement des Ausgleichssystems verbunden ist.

Umgekehrt gilt analog, dass die Bewegungskurven der außenliegenden Ankerpunkte vorteilhaft zu dem gegenüberliegenden Verbindungselement hin gekrümmt sind, falls eine abstoßende Kraft zwischen den beiden gekoppelten Verbindungselementen wirkt. Ganz allgemein kann also gesagt werden, dass das Seilsystem des lateralen Ausgleichssystems vorteilhaft so dimensioniert ist, dass eine Verkippung des Kippelements zu einer axialen Relativbewegung zwischen den beiden Verbindungselementen führt. Abhängig von der Richtung dieser axialen Relativbewegung kann dann entweder durch eine anziehende oder eine abstoßende äußere Kraft eine rückstellende Kraft des lateralen Ausgleichssystems erzeugt werden.

Für die vorliegende Erfindung ist es jedoch nicht zwingend notwendig, dass das laterale Ausgleichssystem eine rückstellende Kraft in Richtung der Grundstellung erzeugt. Vielmehr ist es im Rahmen der Erfindung auch möglich, dass eine im Wesentlichen freie Relativbewegung in x- und/oder y-Richtung stattfindet. Dies ist insbesondere bei einer im Wesentlichen ebenen bzw. flachen Ausgestaltung der Bewegungskurven für die außenliegenden Ankerpunkte der Fall.

Allgemein vorteilhaft ist das laterale Ausgleichssystem so ausgestaltet, dass es in wenigstens einer Raumrichtung (also der x und/oder y-Richtung) eine laterale Relativbewegung von wenigstens 5 mm und insbesondere wenigstens 120 mm ermöglicht. Bei dieser Ausführungsform wird also eine signifikante laterale Beweglichkeit der beiden Teilsysteme ermöglicht, sodass sich das resultierende Kopplungssystem für eine echte mehrdimensionale schwingungsisolierende Kopplung eignet.

Besonders vorteilhaft kann das laterale Ausgleichssystem so ausgestaltet sein, dass bei einer lateralen Relativbewegung von 120 mm eine axiale Relativbewegung von wenigstens 25 mm resultiert. Dies kann insbesondere zur Ausbildung einer rückstellenden Kraft zweckmäßig sein, wie bereits weiter oben beschrieben.

Gemäß einer besonders vorteilhaften Ausführungsform kann das laterale Ausgleichselement so ausgestaltet sein, dass es nicht nur laterale Translationsbewegungen, sondern auch laterale Rotationsbewegungen ausgleichen kann. Hierzu kann das Kippelement vorteilhaft als Dreh-Kippelement ausgestaltet sein, welches über das Kugelgelenk um die zentrale Kopplungsachse drehbar ist. Dabei führt eine solche Drehung des Dreh-Kippelements zu einer Torsion der Seilabschnitte um die zentrale Kopplungsachse. Die Drehbewegung um die Kopplungsachse A entspricht einer relativen Drehung der beiden Teilsysteme innerhalb der xy-Ebene. Bei dieser Ausführungsform kommt also eine solche laterale Drehung zusätzlich zu der bereits beschriebenen Translationsbewegung in x- und/oder y-Richtung hinzu. Dies wird zum einen dadurch erreicht, dass das Kugelgelenk nicht nur die beschriebene Verkippung, sondern auch eine Verdrehung des Kippelements um die zentrale Achse A erlaubt. Außerdem wird dies dadurch erreicht, dass die Seilabschnitte um die zentrale Achse A tordierbar sind. In der Grundstellung (also vor einer solchen Torsion), weisen die Längsrichtungen der Seilabschnitte jeweils sowohl eine axiale, als auch eine radiale Richtungskomponente auf. Das Kippelement ist also, wie oben beschrieben, mit den Seilabschnitten schräg abgespannt. Nach einer Torsion kommt zu dieser schrägen Grundausrichtung der Seilabschnitte eine weitere azimutale Komponente hinzu.

Besonders vorteilhaft ist das Ausgleichssystem so ausgestaltet, dass auch eine solche xy-Drehung zu konvex gekrümmten Bewegungskurven für die außenliegenden Ankerpunkte führt, so dass auch hierdurch eine rückstellende Kraft in Richtung der Grundstellung erzeugt wird. Dies kann analog wie oben für die translatorische Bewegung beschrieben erfolgen, insbesondere bevorzugt durch Ausnutzung der Schwerkraft.

Allgemein vorteilhaft kann die Anzahl n der Seilabschnitte entweder 2, 3 oder 4 betragen. Besonders bevorzugt ist es, wenn diese Seilabschnitte symmetrisch um die zentrale Kopplungsachse A verteilt angeordnet sind. Zwei diametral gegenüberliegend angeordnete Seilabschnitte reichen grundsätzlich aus, um eine laterale Relativbewegung in nur einer seitlichen Richtung (also x oder y) zu ermöglichen. Mit einer Abspannung mit drei sternförmig nach außen verlaufenen Seilabschnitten können dagegen Relativbewegungen in x- und y-Richtung ermöglicht werden. Auch eine Anzahl n = 4 ermöglicht dies, wobei aufgrund der höherzähligen Symmetrie eine noch gleichmäßigere laterale Steifigkeit in x- und y-Richtung erzielt werden kann. Auch größere Werte von n (also größer als 4) sind grundsätzlich möglich und unter Umständen vorteilhaft. Die Werte von n = 2, 3 oder 4 sind allerdings besonders günstig, da der apparative Aufwand sowohl durch die niedrige Anzahl der Elemente als auch die die relativ einfach zu erreichende gleichmäßige Abspannung geringgehalten werden kann.

Allgemein bevorzugte Materialien für die Seilabschnitte sind Aramid oder Dyneema sowie andere Materialien, mit denen eine hohe Festigkeit und axiale Steifigkeit bei geringem Seilquerschnitt erreicht werden kann. Die Seilquerschnitte können beispielsweise allgemein vorteilhaft unterhalb von 10 mm liegen, um eine vergleichsweise geringe Masse des lateralen Ausgleichssystems zu erreichen. Beispielsweise können die Seilquerschnitte zwischen 2 mm und 10 mm liegen, womit insbesondere Zugfestigkeiten zwischen 5 kN und 100 kN erreicht werden können.

Gemäß einer ersten Ausführungsform können die einzelnen Seilabschnitte jeweils durch separate Seile gebildet sein. Alternativ ist es aber auch möglich, die einzelnen Seilabschnitte aus einem übergeordneten Seil zu bilden, welches nur abschnittsweise an einzelnen Punkten fixiert wird. Mit solch einem übergeordneten Seil ist es unter Umständen leichter, eine symmetrische Abspannung in den einzelnen "Strahlen" des Ausgleichssystems zu erzielen. Es sind auch Mischformen denkbar, bei denen mehrere Seilabschnitte jeweils gruppenweise aus einem übergeordneten Seil gebildet sind, wobei jedoch insgesamt mehrere solche Seile und somit mehre Gruppen von Seilabschnitten vorliegen.

Gemäß einer allgemein vorteilhaften Ausführungsform weist das Kopplungssystem eine Mehrzahl s von mechanisch zueinander parallel geschalteten Hauptfederelementen auf. Grundsätzlich reicht ein einzelnes Hauptfederelement aus, um mittels der beschriebenen Serienschaltung eine mechanische Trennung der axialen und lateralen Freiheitsgrade zu ermöglichen. Die Verwendung von mehreren Hauptfederelementen kann jedoch vorteilhaft sein, um eine symmetrische platzsparende Anordnung der einzelnen in Serie geschalteten Kopplungselemente zu erreichen. Insbesondere kann dann das laterale Ausgleichssystem zumindest teilweise auf derselben axialen Position angeordnet sein wie die Mehrzahl von Hauptfederelementen. Mit anderen Worten können die Hauptfederelemente mit dem lateralen Ausgleichssystems in axialer Richtung überlappend angeordnet sein. Diese Ausführungsform bewirkt vorteilhaft einen vergleichsweise geringen axialen Platzbedarf des gesamten Kopplungssystems. Bei vielen der genannten Anwendungen, vor allem im Fahrzeugbereich, ist der in axialer Richtung zur Verfügung stehende Platz stark begrenzt. Eine in axialer Richtung besonders platzsparende Anordnung kann dann erreicht werden, wenn die einzelnen Seilabschnitte und die einzelnen Hauptfederelemente entweder radial und/oder azimutal benachbart angeordnet sind. Insbesondere können die einzelnen Seilabschnitte und die einzelnen Hauptfederelemente miteinander abwechselnd über den Umfang des Kopplungssystems verteilt angeordnet sein. Eine solche verteilte Anordnung kann insbesondere symmetrisch ausgestaltet sein. Bei dieser Ausführungsform ist es besonders bevorzugt, wenn s = n ist oder wenn s ein ganzzahliges Vielfaches von n ist oder wenn n ein ganzzahliges Vielfaches von s ist.

Allgemein vorteilhaft kann das wenigstens eine Hauptfederelement eine Gasdruckfeder sein. Eine Gasdruckfeder ist eine pneumatische Feder, die ein unter Hochdruck stehendes Gas zur Bereitstellung der Federkraft nutzt. Eine Gasdruckfeder zeichnet sich unter anderem durch eine vom Federweg nahezu unabhängige Kraft sowie durch einen vergleichsweise geringem Platzbedarf aus. Eine Gasdruckfeder kann beispielsweise mit einem Gaszylinder und einem in axialer Richtung beweglich darin angeordneten Kolben realisiert sein. Optional kann neben dem variablen Gasvolumen zusätzlich auch ein Flüssigkeitsvolumen vorliegen (beispielsweise mit einem Öl). Alternativ zu einer solchen herkömmlichen Gasdruckfeder kann die Gasdruckfeder aber auch besonders bevorzugt ein gasgefülltes Balgelement aufweisen. Ein solches Balgelement kann insbesondere eine variable axiale Länge aufweisen, wobei die Längenänderung durch ein Zusammendrücken bzw. ein Auseinanderziehen des Balgs ermöglicht wird. Ein solches Balgelement kann beispielsweise durch einen Metallbalg gegeben sein. Mit anderen Worten kann die Wand des Balgelements vorteilhaft aus einem metallischen Material gebildet sein oder zumindest ein solches metallisches Material umfassen. Diese Variante ermöglicht vorteilhaft eine besonders gasdichte Ausgestaltung des Balgelements.

Das Balgelement kann beispielsweise als Faltenbalg und/oder als Membranbalg ausgestaltet sein. Es kann also insbesondere als ringförmige Seitenwand mit einem faltenartigen Profil ausgebildet sein. Das faltenartige Profil kann insbesondere eine regelmäßige Abfolge aus einer Mehrzahl von Wellen aufweisen. Eine solche ringförmige Seitenwand kann vorteilhaft durch eine entsprechend gefaltete beziehungsweise gewellte elastisch verformbare (aber fluiddichte) Membran gebildet sein. Die Verwendung eines gasdichten Balgelements als Hauptfederelement bewirkt den Vorteil, dass der apparative Aufwand für das Kopplungssystem vergleichsweise geringgehalten werden kann. So kann beispielsweise aufgrund der hohen Gasdichtigkeit auf eine separate Druckluftzufuhr verzichtet werden, und das Kopplungssystem kann besonders wartungsarm ausgeführt werden.

Prinzipiell kann das wenigstens eine Hauptfederelement jedoch auch durch andere Arten von Federelementen realisiert sein, insbesondere auch durch eine Schraubenfeder. Auch hierbei werden die Vorteile der vorliegenden Erfindung realisiert. Wesentlich ist nur, dass das Hauptfederelement eine Federung in axialer Richtung ermöglicht. Eine laterale Beweglichkeit des Hauptfederelements soll zwar grundsätzlich nicht ausgeschlossen sein, wird aber aufgrund der Vorteile der vorliegenden Erfindung nicht benötigt. Das Hauptfederelement kann also in laterale Richtung vergleichsweise steif ausgebildet sein.

Allgemein vorteilhaft kann das Kopplungssystem ein Flaschenzugsystem aufweisen, durch welches eine Wegübersetzung zwischen dem Federweg des wenigstens einen Hauptfederelements und dem Weg der hierdurch bewirkten axialen Relativbewegung zwischen den beiden Verbindungselementen gegeben ist. Vorteilhaft ist dabei das Übersetzungsverhältnis i so gewählt, dass der Federweg kleiner ist als der Weg der axialen Relativbewegung. Diese Ausführungsform ist besonders bevorzugt, wenn das wenigstens eine Hauptfederelement eine axiale Auslenkung aufweist, welche kleiner ist als der für die jeweilige Anwendung benötigte axiale Federweg. Besonders vorteilhaft ist diese Ausführungsform im Zusammenhang mit gasgefüllten Balgelementen, da diese sich durch vergleichsweise geringe axiale Federwege auszeichnen. Dieser Nachteil kann durch die Verwendung eines Flaschenzugsystems ausgeglichen werden. Dadurch können die Vorteile von gasgefüllten Balgelementen für eine größere Zahl von Anwendungen genutzt werden. Als Vorteil ist neben dem geringen Wartungsaufwand vor allem die hohe Leistungsdichte und einstellbare Steifigkeit von gasgefüllten Balgelementen zu nennen.

Bei den Ausführungsformen mit einem Flaschenzugsystem beträgt das Verhältnis i zwischen dem Weg der axialen Relativbewegung der beiden Verbindungselemente und dem Federweg des wenigstens einen Hauptfederelements vorteilhaft wenigstens 2. Mit anderen Worten ist dabei der effektive Federweg des Hauptfederelements zumindest verdoppelt. Beispielsweise kann i in einem Bereich oberhalb von 2 und insbesondere zwischen 2 und 10 liegen. Besonders vorteilhaft ist i wenigstens 3. Das gewünschte Übersetzungsverhältnis des Flaschenzugsystems kann relativ einfach über die Zahl der verwendeten Umlenkrollen eingestellt werden.

Gemäß einer ersten vorteilhaften Ausführungsvariante des Flaschenzugsystems bilden die n Seilabschnitte des lateralen Ausgleichssystems jeweils Teile des Flaschenzugsystems. Mit anderen Worten werden die n Seilabschnitte hier doppelt genutzt: zum einen zur lateralen Abspannung im Ausgleichssystem und zum anderen als Teile des Flaschenzugsystems, um ein Weg-übersetzungsverhältnis zu bewirken. Durch diese Doppelnutzung kann der apparative Gesamtaufwand vorteilhaft niedrig gehalten werden. Das Flaschenzugsystem besteht bei dieser Ausführungsform aus einer Mehrzahl n von Einzel-Flaschenzügen, nämlich einem Flaschenzug in jedem azimutalen Segment des Ausgleichssystems. Zweckmäßig sind hierbei alle Einzel-Flaschenzüge untereinander gleich ausgebildet, sodass sich wiederum ein symmetrisches Ausgleichssystem (mit n-zähliger Rotationssymmetrie) ergibt.

Gemäß einer zweiten vorteilhaften Ausführungsvariante des Flaschenzugsystems ist dieses mit wenigstens einem zusätzlichen Flaschenzugseil aufgebaut. Mit anderen Worten werden hier nicht die Seilabschnitte des lateralen Ausgleichssystems für das Flaschenzugsystem benutzt, sondern ein oder mehrere zusätzliche Seile. Es ist aber auch die Kombination beider Varianten denkbar, bei welcher zwei getrennte Flaschenzugsysteme vorliegen: Eines, welches die Seilabschnitte des Ausgleichssystems nutzt und ein weiteres mit einem oder mehreren zusätzlichen Seilen. Mit einer solchen Kombination kann vorteilhaft ein besonders hohes Übersetzungsverhältnis i erreicht werden.

Allgemein vorteilhaft kann das Kopplungssystem zusätzlich ein oder mehrere Notlauf-Federelemente umfassen. Das wenigstens eine Notlauf-Federelement kann dabei grundsätzlich entweder mechanisch parallel oder mechanisch in Serie zu dem wenigstens einen Hauptfederelement angeordnet sein. Besonders bevorzugt ist hierbei die serielle Anordnung. Dabei ist das Notlauf-Federelement bevorzugt steifer ausgebildet als das wenigstens eine Hauptfederelement. Bei einer parallelen Anordnung ist dagegen das Notlauf-Federelement bevorzugt weniger steif ausgebildet als das wenigstens eine Hauptfederelement. Bei einem Versagen des Hauptfederelements übernimmt das Notlauf-Federelement allein die benötigte axiale Federung. Auch in solch einem Fall wird durch das Ausgleichssystem weiterhin eine laterale Ausgleichsbewegung ermöglicht, wenn dieses gemäß einer bevorzugten Variante mechanisch in Serie zu dem Notlauf-Federelement angeordnet ist.

Nachfolgend wird die Erfindung anhand einiger bevorzugter Ausführungsbeispiele unter Bezugnahme auf die angehängten Zeichnungen beschrieben, in denen:
- Figur 1: eine schematische Prinzipdarstellung eines mechanischen Kopplungssystems nach einer ersten Ausführungsform der Erfindung zeigt,
- Figur 2: eine schematische Schnittdarstellung für eine Realisierung der Ausführungsform der Figur 1 zeigt,
- Figur 3: eine Detaildarstellung des lateralen Ausgleichssystems aus dem Kopplungssystem der Figur 2 zeigt,
- Figur 4: einen lateral ausgelenkten Zustand des Ausgleichssystems der Figur 3 zeigt,
- Figur 5: eine schematische Aufsicht auf das Kippelement des Ausgleichssystems der Figuren 2 bis 4 zeigt,
- Figur 6: einen verdrehten Zustand des Kippelements der Figur 5 zeigt,
- Figur 7: eine schematische perspektivische Darstellung von Teilen des Kopplungssystems aus dem Beispiel der Figuren 2 bis 6 zeigt,
- Figur 8: eine schematische Prinzipdarstellung eines mechanischen Kopplungssystems nach einer zweiten Ausführungsform der Erfindung zeigt und
- Figur 9: eine schematische Schnittdarstellung für eine Realisierung der Ausführungsform der Figur 7 zeigt.

In den Figuren sind gleiche oder funktionsgleiche Elemente mit gleichen Bezugszeichen versehen.

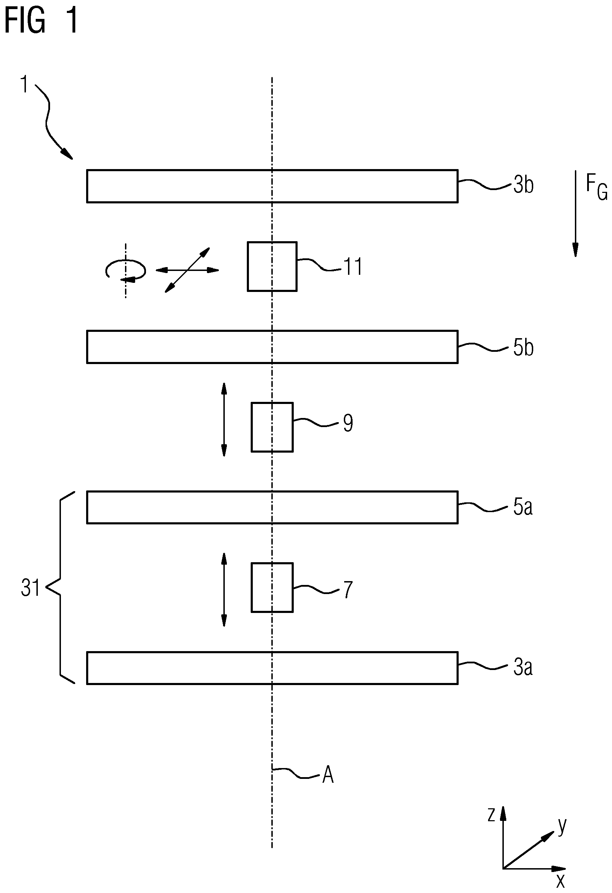

In Figur 1 ist eine schematische Prinzipdarstellung eines mechanischen Kopplungssystems 1 nach einer ersten Ausführungsform der Erfindung gezeigt. Dieses Kopplungssystem 1 dient zur schwingungsisolierenden Kopplung zweier mechanischer Teilsysteme. Diese Teilsysteme sind prinzipiell frei wählbar, beispielsweise aus dem Bereich der vorab beschriebenen Anwendungsfelder. Zur Verbindung mit den beiden Teilsystemen weist das Kopplungssystem 1 zwei Verbindungselemente 3a und 3b auf, welche mit dem jeweils zugehörigen Teilsystem mechanisch starr verbunden werden können. Beispielsweise kann es sich dabei um Verbindungsplatten halten, aber prinzipiell auch um beliebig geformte mechanische Schnittstellen.

Das Kopplungssystem 1 der Figur 1 weist eine zentrale Kopplungsachse A auf, deren Richtung durch die kürzeste Verbindungslinie zwischen den Verbindungselementen 3a und 3b gegeben ist. Entsprechend ist ein kartesisches Koordinatensystem angegeben, dessen z-Richtung entlang dieser Kopplungsachse A ausgerichtet ist. Die schwingungsisolierende Kopplung zwischen den beiden Verbindungselementen 3a und 3b wird durch eine mechanische Serienschaltung mehrerer einzelner Kopplungselemente vermittelt. Im Inneren dieser mechanischen Serienschaltung finden sich daher noch zwei Zwischenelemente 5a und 5b, über welche die Kopplungselemente miteinander verbunden sind. Im Einzelnen sind diese Kopplungselemente, vom ersten Verbindungselement 3a ausgehend, durch ein Hauptfederelement 7, ein Notlauf-Federelement 9 und durch ein laterales Ausgleichssystem 11 gegeben. Dabei ist das laterale Ausgleichssystem 11 obenliegend mit dem zweiten Verbindungselement 3b verbunden, welches als äußeres Ankerelement wirkt. Das erste Zwischenelement 5a ist zwischen Hauptfederelement 7 und Notlauf-Federelement 9 angeordnet. Das zweite Zwischenelement 5b wirkt als zentrales Ankerelement und ist zwischen dem Notlauf-Federelement 9 und dem lateralen Ausgleichssystem 11 angeordnet. Die angegebene Reihenfolge bezieht sich dabei jeweils auf die mechanische Wirkung der einzelnen Elemente in der Serienschaltung und nicht notwendigerweise auf die genaue geometrische Lage.

Sowohl das Hauptfederelement 7 als auch das Notlauf-Federelement 9 sind dazu ausgelegt, eine Federung in axialer Richtung zu bewirken. Dies ist durch die neben den Elementen stehenden Doppelpfeile angedeutet. Das laterale Ausgleichssystem 11 ist dazu ausgelegt, eine laterale Beweglichkeit in x- und/oder y-Richtung zu bewirken. Zusätzlich kann damit optional eine Drehbewegung in xy-Ebene ausgeglichen werden. In dem Kopplungssystem 1 liegt also eine mechanische Serienschaltung von unterschiedlichen Kopplungselementen vor, wobei eine Auftrennung von axialer Relativbewegung und lateraler Relativbewegung in unterschiedliche Kopplungselemente erfolgt.

Das Hauptfederelement 7 kann stellvertretend für eine Mehrzahl von solchen Hauptfederelementen stehen, welche beispielsweise mechanisch parallelgeschaltet sein können. Optional kann im Bereich dieses wenigstens einen Hauptfederelements ein Flaschenzugsystem 31 angeordnet sein, um ein Weg-Übersetzungsverhältnis zwischen dem Federweg des wenigstens einen Hauptfederelements und der axialen Relativbewegung der damit verbundenen Elemente 3a und 5a zu bewirken.

Wie durch die Darstellungsreihenfolge der Figur 1 angedeutet, kann das zweite Verbindungselement 3b geodätisch oberhalb von dem ersten Verbindungselement 3a liegen. Hierdurch wird erreicht, dass durch die auf alle Elemente (auch die hier nicht gezeigten mechanischen Teilsysteme) einwirkende Schwerkraft F_{G} eine Druckkraft zwischen den beiden Verbindungselementen 3a und 3b erzeugt wird. Aus einer solchen Druckkraft kann optional in dem lateralen Ausgleichssystem 11 eine laterale Rückstellkraft F_{R} erzeugt werden, wie durch die folgenden Figuren noch näher erläutert wird.

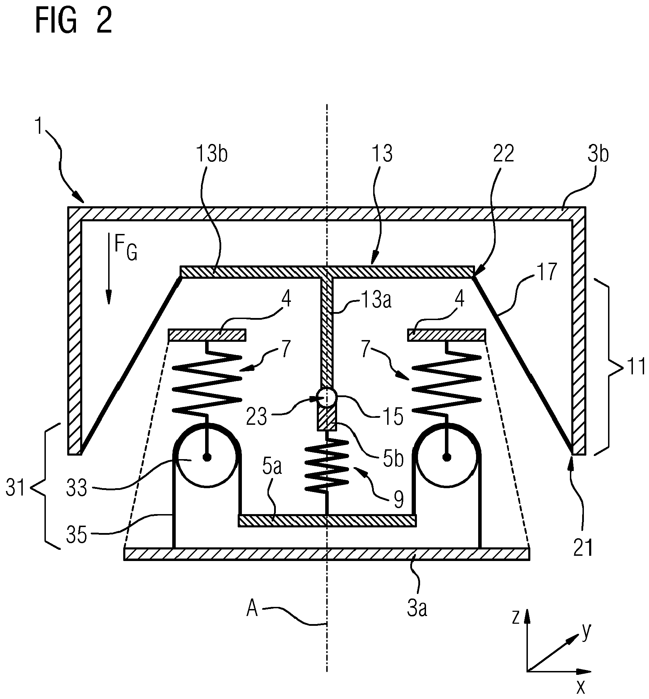

Figur 2 zeigt eine schematische Schnittdarstellung für eine beispielhafte Realisierung der Ausführungsform der Figur 1. Gezeigt ist ein mechanisches Kopplungssystem 1 in schematischer Schnittdarstellung, wobei die Schnittebene die xz-Ebene ist, welche die Kopplungsachse A enthält. Das geodätisch untenliegende erste Verbindungselement ist hier mit 3a bezeichnet und das geodätisch obenliegende zweite Verbindungselement ist mit 3b bezeichnet. Die Schwerkraft F_{G} drückt also das zweite Verbindungselement auf das erste. Das untenliegende erste Verbindungselement 3a ist über zwei Flaschenzugseile 35 mit dem ersten Zwischenelement 5a verbunden. Diese Seilabschnitte greifen über zwei Umlenkrollen 33 an zwei mechanisch parallel geschalteten Hauptfederelementen 7 an. Es können auch noch mehr Hauptfederelemente 7 und/oder mehr Flaschenzugseile und Rollen vorliegen, welche nur in der gezeigten Schnittdarstellung nicht zu sehen sind. Obenliegend sind diese Hauptfederelemente mit Platten 4 verbunden, welche jeweils mechanisch starr an dem ersten Verbindungselement 3a verankert sind. Hierdurch ergibt sich ein Flaschenzugsystem 31, durch welches die Länge der axialen Relativbewegung zwischen den Elementen 3a und 5a im Vergleich zu dem Federweg der Hauptfederelemente 7 um einen Faktor 2 vergrößert ist. Dieses Weg-Übersetzungsverhältnis ist nur beispielhaft zu verstehen und kann durch die Zahl der Umlenkrollen des Flaschenzugs in bekannter Weise verändert werden.

Das erste Zwischenelement 5a ist über ein Notlauf-Federelement 9 mit dem zweiten Zwischenelement 5b verbunden. Das Notlauf-Federelement 9 dient dazu, auch bei einem Ausfall der Hauptfederelemente 7 eine axiale Federung zu ermöglichen. Sowohl die Hauptfederelemente 7 als auch das Notlauf-Federelement 9 können im Wesentlichen ausschließlich für eine Federung in axialer Richtung ausgelegt sein. Dagegen wird die laterale Relativbewegung der beiden Verbindungselemente 3a und 3b im Wesentlichen ausschließlich durch das in Serie geschaltete laterale Ausgleichssystem 11 ermöglicht.

Das zweite Zwischenelement 5b ist hierzu über das laterale Ausgleichssystem 11 mit dem zweiten Verbindungselement 3b verbunden. Das zweite Zwischenelement 5b ist über ein Kugelgelenk 15 zunächst mit einem in sich starren Kippelement 13 verbunden. Das Zentrum des Kugelgelenks bildet somit einen zentralen Ankerpunkt 23 dieses Kippelements 13 aus. Das Kippelement 13 weist eine Kippstange 13a auf, welche in der hier dargestellten Grundstellung des Kugelgelenks entlang der zentralen Kopplungsachse A ausgerichtet ist. Durch das Kugelgelenk 15 ist das Kippelement 13 aus dieser Grundstellung heraus lateral kippbar. Neben der Kippstange 13a weist das Kippelement 13 noch eine Mehrzahl von Kipparmen 13b auf, welche sich von der Kippstange 13a aus strahlenförmig nach außen erstrecken. Bei dem Beispiel der Figur 2 handelt es sich beispielsweise um ein Kippkreuz mit vier Kipparmen, von denen zwei in der gezeigten Querschnittsdarstellung zu sehen sind. Die radial außenliegenden Enden dieser Kipparme bilden die innenliegenden Ankerpunkte 22 für die nachfolgende Seilabspannung aus. Hierzu ist jeder dieser radial innenliegenden Ankerpunkte 22 über einen zugeordneten Seilabschnitt 17 mit einem zugeordneten radial außenliegenden Ankerpunkt 21 verbunden, welcher sich im untenliegenden Bereich des zweiten Verbindungselements 3b befindet. Es ergibt sich also insgesamt eine strahlenförmig symmetrische Abspannung des Kippelements 13 gegen das zweite Verbindungselement 3b, wobei diese Abspannung aus vier Kipparmen 13b und vier Seilabschnitten 17 gebildet ist. Durch diese vier Seilabschnitte 17 sind vier innenliegende Ankerpunkte des Kippelements 13 mit den jeweils zugehörigen vier außenliegenden Ankerpunkten 21 des zweiten Verbindungselements 3b verbunden.

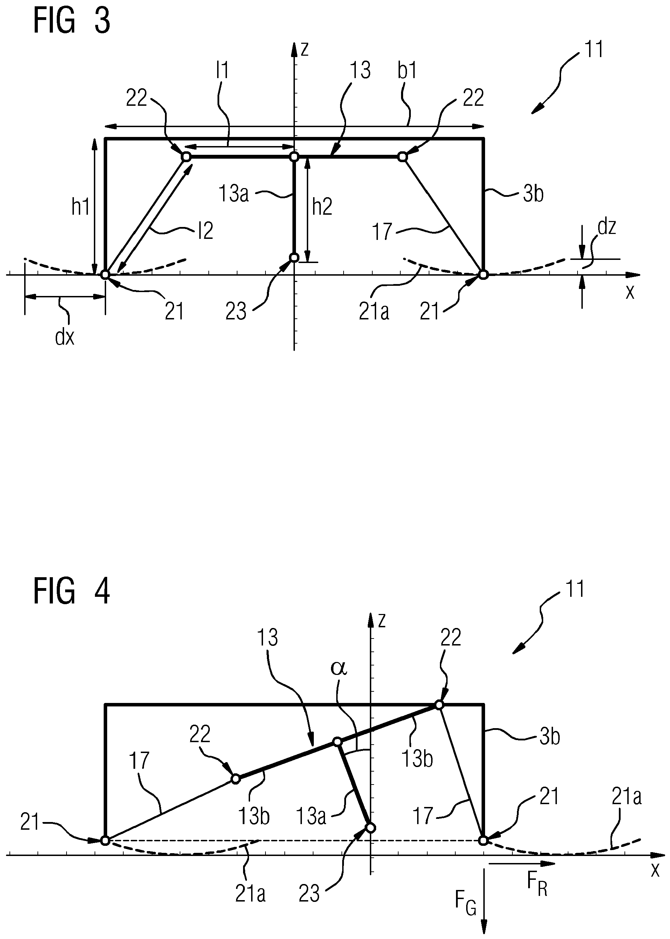

Durch diese Art der strahlenförmigen Abspannung wird in dem lateralen Ausgleichssystem 11 eine hohe axiale Steifigkeit, aber gleichzeitig eine laterale Beweglichkeit in x- und y-Richtung erreicht. Das Zustandekommen der lateralen Beweglichkeit soll anhand der Figuren 3 und 4 noch näher erläutert werden. So zeigt die Figur 3 eine Detaildarstellung des lateralen Ausgleichssystems 11 aus dem Kopplungssystem 1 der Figur 2. Gezeigt sind das Kippelement 13 und das zweite Verbindungselement 3b sowie die Abspannung mit den Seilabschnitten 17. Auch in Figur 3 ist das Kippelement 13 in seiner Grundstellung, d.h. seine Kippstange 13a ist in z-Richtung ausgerichtet. In Figur 4 dagegen ist das Kippelement 13 mit seinem maximalen Kippwinkel α innerhalb der xz-Ebene gegen die z-Richtung gekippt. Dieser maximale Kippwinkel α ergibt sich daraus, dass in dieser Stellung der rechts dargestellte Kipparm 13b von unten gegen das zweite Verbindungselement 3b anstößt. Das zweite Verbindungselement 3b ist hier haubenartig geformt und umgibt so die übrigen Teile des lateralen Ausgleichssystems. In der gekippten Stellung der Figur 4 bleiben beide gezeigten Seilabschnitte (sowie auch die übrigen in der Schnittebene nicht dargestellten Seilabschnitte) unter Spannung. Infolge dieser Abspannung kann sich das zweite Verbindungselement 3b bei einer Verkippung des Kippelements lateral bewegen (hier in x-Richtung), ohne dass es zu einer Verkippung des zweiten Verbindungselements 3b kommt. Mit anderen Worten bleibt bei einer solchen Verkippung des Kippelements das zweite Verbindungselement 3b gerade und parallel über dem ersten Verbindungselement 3a ausgerichtet.

Die bei der maximalen Verkippung um den Winkel α erreichbare maximale laterale Auslenkung in x-Richtung ist in Figur 3 mit dx bezeichnet. Abhängig von der Wahl der geometrischen Parameter für die Seillängen und die Lage der Ankerpunkte kann aus einer solchen lateralen Relativbewegung dx auch eine axiale Relativbewegung folgen, welche in Figur 3 mit dz bezeichnet ist. Bei dem Beispiel der Figur 3 sind die geometrischen Parameter so gewählt, dass sich bei einer lateralen Auslenkung dx der außenliegenden Ankerpunkte 21 aus der Grundstellung heraus eine axiale Anhebung dieser Ankerpunkte 21 ergibt. Mit anderen Worten liegen die außenliegenden Ankerpunkte 21 bei diesem Beispiel auf konvex nach oben gekrümmten Bewegungsbahnen 21a. Bei symmetrischer Ausgestaltung des Ausgleichssystems ergibt sich auch in der hier nicht dargestellten y-Richtung eine entsprechende konvexe Krümmung, wobei das Minimum der Kurve genau der Grundstellung entspricht. Bei einer solchen konvex nach oben gekrümmten Bewegungsbahn führt also jede laterale Auslenkung zu einer leichten Anhebung des zweiten Verbindungselements 3b. Da dieses zweite Verbindungselement 3b aber obenliegend angeordnet ist, bewirkt der Einfluss der Schwerkraft F_{G} eine Rückkehr hin zu dem Minimum. Mit anderen Worten ergibt sich eine laterale rückstellende Kraft F_{R} in Richtung der Grundstellung.

Die genaue Form und Krümmung der Bewegungsbahnen 21a ergeben sich mittels einfacher geometrischer Zusammenhänge aus fünf wesentlichen geometrischen Parametern der Abspannung. Diese Parameter sind:
- die Breite b1 des zweiten Verbindungselements 3b oder genauer gesagt der laterale Abstand der gegenüberliegenden außenliegenden Ankerpunkte 21,
- die Höhe h1 des zweiten Verbindungselements 3b auf der Innenseite des innenliegenden Hohlraums,
- die axiale Länge bzw. Höhe h2 der Kippstange,
- die Länge l1 eines jeden Kipparms 13b und
- die Länge l2 eines jeden Seilabschnitts 17.

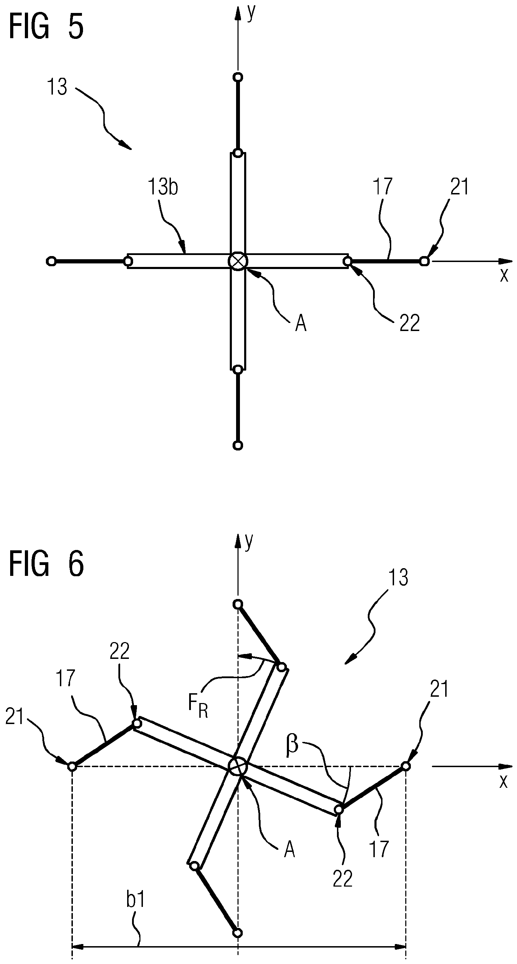

Bei dem Kippelement in dem Ausführungsbeispiel der Figuren 2 bis 4 kann es sich optional um ein Dreh-Kippelement handeln. Mit anderen Worten ist das Kippelement 13 nicht dann nur aus der z-Richtung heraus kippbar, sondern es ist mittels des Kugelgelenks 15 auch um die Kippstange drehbar. Eine solche Drehung wird im Folgenden mittels der Figuren 5 und 6 verdeutlicht. So zeigt Figur 5 eine schematische Aufsicht auf das Kippelement 13 in seiner Grundstellung, wobei die Blickrichtung entlang der z-Achse verläuft. In dieser Darstellung sind die vier kreuzförmig angeordneten Kipparme 13b gut zu erkennen, welche symmetrisch um die zentrale Achse A angeordnet sind. In der Grundstellung sind die einzelnen Kipparme genau in x-Richtung bzw. in y-Richtung ausgerichtet. Auch die an den außenliegenden Ankerpunkten 22 ansetzenden Seilabschnitte 17 liegen in der Projektion der Figur 5 genau in dieser Richtung, da die z-Komponente der Seilabschnitte hier nicht sichtbar ist. Entsprechend liegen auch die außenliegenden Ankerpunkte 21, an denen die einzelnen Seilabschnitte angreifen, in der Projektion genau auf der x- bzw. y-Achse.

In Figur 6 ist ein verdrehter Zustand des Kippelements 13 gezeigt, bei dem dieses Kippelement um einen Winkel β um die zentrale Achse A aus seiner Grundstellung heraus gedreht ist. Um die Zusammenhänge zu verdeutlichen, ist dieser Winkel β dabei übertrieben groß dargestellt. Bei der dargestellten relativen Drehung bleiben das zweite Verbindungselement 3b und somit auch die vier darauf angeordneten außenliegenden Ankerpunkte 21 auf den (willkürlich definierten) x- und y-Koordinatenachsen fixiert, während das Kippelement 13 relativ dazu gedreht wird. Dadurch, dass auch der Abstand der jeweils diametral gegenüberliegenden Ankerpunkte 21 konstant beim Wert b1 bleiben muss, vergrößern sich aufgrund dieser relativen Drehung die Projektionen der einzelnen Längen der Seilabschnitte 17 in die xy-Ebene. Da die Längen der einzelnen Seilabschnitte 17 aber insgesamt konstant sind, muss sich dabei gleichzeitig die z-Komponente der einzelnen Seilabschnitte 17 verkürzen. Dies entspricht wiederum einer Anhebung der außenliegenden Ankerpunkte, ähnlich wie sie im Zusammenhang mit den Figuren 3 und 4 für die translatorische laterale Bewegung beschrieben wurde. Mit anderen Worten ergibt sich also auch für die relative Drehung der miteinander gekoppelten Elemente eine nach oben gekrümmte konvexe Bewegungsbahnen der jeweiligen Ankerpunkte 21, sodass sich auch hier eine aus der Schwerkraft resultierende rückstellende Kraft F_{R} zurück in die Grundposition ergibt.

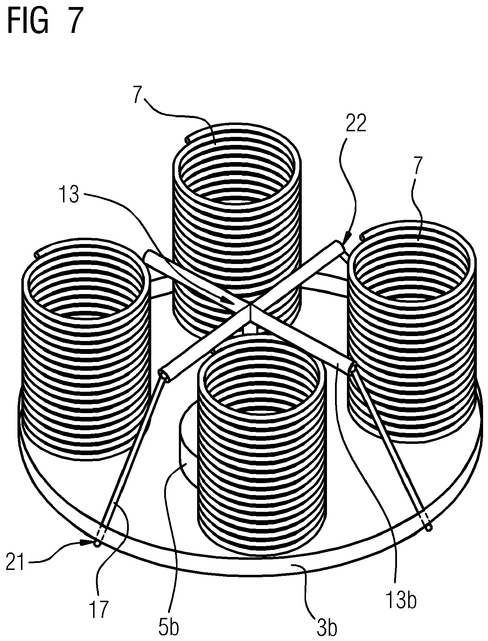

Figur 7 zeigt eine schematische perspektivische Darstellung von ausgewählten Teilen eines mechanischen Kopplungssystems, welches ähnlich wie das System aus dem Beispiel der Figuren 2 bis 6 ausgebildet ist. Gezeigt ist insbesondere das vierarmige Kippkreuz 13, welches mit vier Seilabschnitten 17 gegen die außenliegenden Ankerpunkte 21 des zweiten Verbindungselements 3b verspannt ist. Auch hier ist das Kippelement 13 in seiner Grundposition dargestellt. Aus Gründen der Übersichtlichkeit ist von dem haubenartig ausgestalteten zweiten Verbindungselement 3b nur der untenliegende umlaufende Ring dargestellt, auf dem die vier außenliegenden Ankerpunkte 21 liegen. Der in Umfangsrichtung zwischen den einzelnen Kipparmen 13b und den einzelnen Seilabschnitten 17 vorhandene Platz wird hier durch vier Hauptfederelemente 7 genutzt, welche auf diese Weise vergleichsweise platzsparend untergebracht werden können. Insbesondere weist bei dieser axial überlappenden Anordnung der Hauptfederelemente 7 und des lateralen Ausgleichssystems 11 das Kopplungssystem insgesamt einen vergleichsweise geringen axialen Platzbedarf auf. Der Übersichtlichkeit halber sind in Figur 7 die weiteren Elemente, insbesondere die Notlauf-Feder 9, das erste Zwischenelement 5a, das erste Verbindungselement 3a sowie das Flaschenzugsystem 31 und die oberen Platten 4 nicht mit eingezeichnet. Diese Komponenten und ihre mechanische Verbindung können jedoch prinzipiell ähnlich ausgestaltet sein wie beim Beispiel der Figur 2. Die Hauptfederelemente 7 aus dem Beispiel der Figur 7 können insbesondere als dauerhaft gasgefüllte Metallbälge ausgestaltet sein.

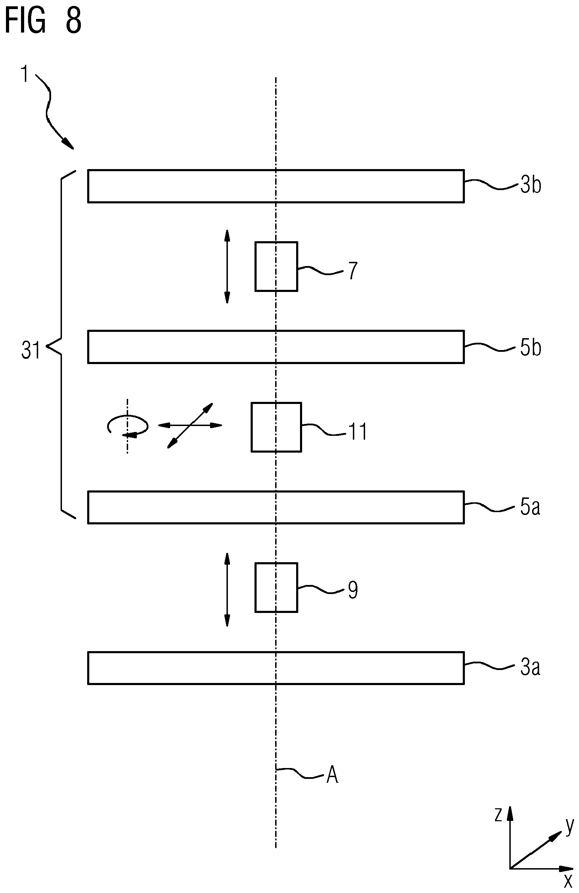

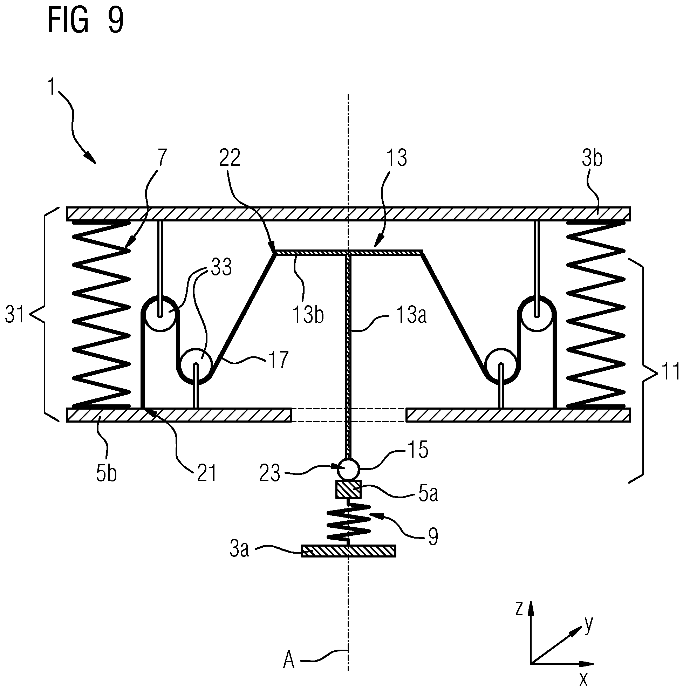

In den Figuren 8 und 9 ist eine alternative, zweite Ausführungsform der Erfindung dargestellt. So zeigt Figur 8 eine schematische Prinzipdarstellung eines mechanischen Kopplungssystems 1 nach dieser zweiten Ausführungsform. Auch hier ist nur die mechanisch in Serie geschaltete Kopplung der beiden Verbindungselemente 3a und 3b über die dazwischenliegenden Zwischenelemente 5a und 5b entlang der zentralen Kopplungsachse A in äußerst schematischer Weise dargestellt. Ähnlich wie bei der Ausführungsform der Figur 1 liegt auch hier eine mechanische Serienschaltung von drei wesentlichen Kopplungselementen vor, nämlich einem Notlauf-Federelement 9, einem lateralen Ausgleichssystem 11 und wenigstens einem Hauptfederelement 7. Die Reihenfolge dieser einzelnen Kopplungselemente ist hier jedoch unterschiedlich gewählt, sodass das erste Verbindungselement zunächst über die Notlauf-Feder 9 mit dem ersten Zwischenelement 5a verbunden ist. Dieses erste Zwischenelement 5a dient als zentrales Ankerelement und ist über das hier innenliegende laterale Ausgleichssystem 11 mit dem zweiten Zwischenelement 5b gekoppelt. Dieses zweite Zwischenelement 5b dient als äußeres Ankerelement und ist über das Hauptfederelement 7 (welches wiederum beispielhaft für mehrere solche Hauptfederelemente stehen kann) mit dem gegenüberliegenden zweiten Verbindungselement 3b verbunden. Ähnlich wie bei der Ausführungsform der Figur 1 liegt also auch hier eine Trennung der axialen Freiheitsgrade (in den Elementen 7 und 9) und der lateralen Freiheitsgrade (im Ausgleichssystem 11) vor. Die Reihenfolge der Serienschaltung ist dahingehend geändert, dass nun das laterale Ausgleichssystem 11 zwischen den beiden anderen Kopplungselemente liegt. Alternativ zu den beiden hier beschriebenen Ausführungsformen ist es grundsätzlich auch möglich, dass beispielsweise das wenigstens eine Hauptfederelement 7 in der Mitte der Serienschaltung liegt oder dass das optionale Notlauf-Federelement 9 gar nicht vorhanden ist und dass somit nur eine Serienschaltung von zwei wesentlichen Kopplungselementen 7 und 11 vorliegt.

Ein weiterer Unterschied zwischen der hier beschriebenen ersten und zweiten Ausführungsform liegt darin, dass das optionale Flaschenzugsystem 31 anders ausgestaltet ist. Bei der Ausführungsform der Figur 8 wirkt das Flaschenzugsystem 31 übergreifend über eine größere Anzahl von Elementen hinweg: es verbindet hier das erste Zwischenelement 5a, das zweite Zwischenelement 5b und das zweite Verbindungselement 3b, sodass sowohl das laterale Ausgleichssystem 11 als auch die Hauptfederelemente 7 in das Flaschenzugsystem 31 einbezogen sind.

Eine beispielhafte Realisierung für die zweite Ausführungsform der Erfindung ist in Figur 9 gezeigt. Figur 9 zeigt eine schematische Schnittdarstellung eines beispielhaften mechanischen Ausgleichssystems 1 in der xz-Ebene. Auch hier sind die beiden Verbindungselemente 3a und 3b geodätisch übereinanderliegend angeordnet, sodass die einwirkende Schwerkraft diese beiden Verbindungselemente zusammendrückt.

Das untenliegende erste Verbindungselement 3a ist zunächst über ein axial federndes Notlauf-Federelement 9 mit dem darüberliegenden ersten Zwischenelement 5a verbunden. Dieses erste Zwischenelement 5a ist über ein Kugelgelenk 15 mit dem zentralen Ankerpunkt 23 eines Kippelements 13 verbunden. Dieses Kippelement ist beispielsweise ähnlich wie das Kippelement des ersten Ausführungsbeispiels aufgebaut und umfasst eine Kippstange 13a sowie eine Mehrzahl von strahlenförmig nach außen gerichteten Kipparmen 13b. Auch hier kann das Kippelement 13 als vierstrahliges Kippkreuz ausgestaltet sein. An den Enden der Kipparmen 13b sind wiederum die radial innenliegenden Ankerpunkte 22 für die Abspannung mit einem Seilsystem angeordnet. Über jeden dieser Ankerpunkte 22 ist ein Seilabschnitt 17 mit dem Kippelement verknüpft. Diese einzelnen Seilabschnitte 17 erstrecken sich radial nach außen und insgesamt axial nach unten, bis sie mit ihrem gegenüberliegenden Seilende an den radial außenliegenden Ankerpunkten 21 des zweiten Zwischenelement 5b verknüpft sind. In den Bereich zwischen den Ankerpunkten 21 und 22 wirken die Seilabschnitte 17 jedoch zusätzlich als Flaschenzugseil eines übergeordneten Flaschenzugsystems 31. Hierzu umläuft jeder Seilabschnitt zusätzlich zwei Umlenkrollen 33, wobei jeweils eine dieser Umlenkrollen an dem zweiten Zwischenelement 5b fixiert ist und die andere an dem zweiten Verbindungselements 3b fixiert ist. Die Anzahl der gezeigten Umlenkrollen ist jedoch auch hier nur beispielhaft zu verstehen, sodass auch eine geringere oder eine höhere Anzahl von Umlenkrollen 33 vorliegen kann.

Schließlich ist das zweite Zwischenelement 5b über eine Mehrzahl von untereinander parallelgeschalteten Hauptfederelementen 7 mit dem zweiten Verbindungselement 3b verbunden. Auch hier kann die Anzahl der Hauptfederelemente prinzipiell entweder gleich oder unterschiedlich gewählt sein wie die Anzahl der einzelnen Seilabschnitte 17 (welche der Anzahl der einzelnen Kipparme 13b sowie der jeweiligen Ankerpunkte 21 bzw. 22 entspricht). In jedem Fall sind die einzelnen Hauptfederelemente 7 auch hier in axialer Richtung ausgerichtet und bewirken entsprechend eine axiale Federung. Auch die Funktionsweise des lateralen Ausgleichssystems ist ähnlich wie im Zusammenhang mit der ersten Ausführungsform ausführlich beschrieben und bewirkt insgesamt eine laterale Beweglichkeit in x- und/oder y-Richtung sowie optional eine relative Drehbewegung innerhalb der xy-Ebene. Um eine entsprechende laterale Beweglichkeit des Kippelements 13 zu ermöglichen, ist das zweite Zwischenelement 5b im Bereich der zentralen Kopplungsachse A mit einer ausreichend großen Aussparung versehen, was in Figur 9 durch die beiden gestrichelten Linien angedeutet ist.

Das in Figur 9 dargestellte Flaschenzugsystem 31 bewirkt, dass die axiale Relativbewegung zwischen dem ersten Zwischenelement 5a und den zweiten Verbindungselement 3b größer sein kann als der axiale Federweg der verwendeten Hauptfederelemente 7. Bei der dargestellten Anzahl der Umlenkrollen 33 pro Segment ergibt sich beispielsweise ein Weg-Übersetzungsverhältnis von 3. Dieses Weg-Übersetzungsverhältnis kann jedoch prinzipiell unterschiedlich gewählt werden, sodass auch Hauptfederelemente 7 mit vergleichsweise geringen Federwegen für Anwendungen mit größeren axialen Relativbewegungen der beiden Verbindungselemente 3a und 3b verwendet werden können. Dies ermöglicht insbesondere den Einsatz von gasgefüllten Balgelementen für eine größere Zahl von Anwendungen.

## Patentansprüche

1. Mechanisches Kopplungssystem (1) zur schwingungsisolierenden Kopplung zwischen einem ersten und einem zweiten mechanischen Teilsystem entlang einer zentralen Kopplungsachse (A), umfassend
- ein erstes Verbindungselement (3a) zur Verbindung mit dem ersten mechanischen Teilsystem,
- ein zweites Verbindungselement (3b) zur Verbindung mit dem zweiten mechanischen Teilsystem,
- wenigstens ein Hauptfederelement (7), welches zur Federung von axialen Relativbewegungen der beiden Teilsysteme entlang der Kopplungsachse A ausgelegt ist,
sowie
- ein mechanisch zu dem wenigstens einen Hauptfederelement (7) in Serie geschaltetes laterales Ausgleichssystem (11) mit
- einem zentralen Ankerelement (5b,5a)
- einem Kippelement (13), welches eine Kippstange (13a) umfasst, die über ein Kugelgelenk (15) lateral kippbar mit dem zentralen Ankerelement (5b,5a) verbunden ist, wobei die Kippstange (13a) bei einer zentralen Grundstellung des Kugelgelenks (15) entlang der Kopplungsachse A ausgerichtet ist,
- einem äußeren Ankerelement (3b,5b)
- und mit einer Mehrzahl n von Seilabschnitten (17) oder beweglich gelagerten Stangen, mit denen das Kippelement (13) derart lateral gegen das äußere Ankerelement (3b,5b) abgespannt ist, dass eine Verkippung des Kippelements (13) in einer lateralen Relativbewegung zwischen dem zentralen Ankerelement (5b,5a) und dem äußeren Ankerelement (3b,5b) resultiert.

2. Kopplungssystem (1) nach Anspruch 1,
- welches zusätzlich ein oder mehrere Zwischenelemente (5a,5b) aufweist, welche mechanisch zwischen die beiden Verbindungselemente (3a,3b) geschaltet sind,
- wobei das zentrale Ankerelement entweder das erste Verbindungselement (3a) oder ein erstes oder zweites Zwischenelement (5a,5b) ist,
- und/oder wobei das äußere Ankerelement entweder das zweite Verbindungselement (3b) oder ein erstes oder zweites Zwischenelement (5a,5b) ist.

3. Kopplungssystem (1) nach einem der Ansprüche 1 oder 2, bei welchem das laterale Ausgleichssystem (11) derart ausgestaltet ist, dass bei einer lateralen Verkippung des Kippelements (13) eine rückstellende Kraft (F_{R}) zurück zur zentralen Stellung des Kugelgelenks (15) resultiert.

4. Kopplungssystem (1) nach Anspruch 3, bei welchem die beiden Verbindungselemente (3a,3b) geodätisch übereinanderliegend angeordnet sind, so dass die auf die beiden zu koppelnden Teilsysteme einwirkende Schwerkraft (F_{G}) eine Druckkraft zwischen der beiden Verbindungselementen bewirken kann, wobei die rückstellende Kraft (F_{R}) des lateralen Ausgleichssystems (11) aus dieser Druckkraft resultiert.

5. Kopplungssystem (1) nach einem der vorhergehenden Ansprüche, bei welchem das äußere Ankerelement (3b) eine Mehrzahl n von radial außenliegenden Ankerpunkten (21) aufweist, welche mit den radial außenliegenden Enden der n Seilabschnitte (17) verbunden sind,
wobei diese außenliegenden Ankerpunkte (21) durch die Verspannung der Seilabschnitte (17) jeweils auf Bewegungsbahnen (21a) bewegbar sind, welche derart konvex gekrümmt sind, dass durch jede laterale Auslenkung aus der zentralen Grundstellung des Kugelgelenks (15) der axiale Abstand zwischen den beiden Verbindungselementen (3a,3b) vergrößert wird.

6. Kopplungssystem (1) nach einem der vorhergehenden Ansprüche, bei welchem das laterale Ausgleichssystem (11) in wenigstens einer Raumrichtung (x,y) eine laterale Relativbewegung der beiden Verbindungselemente (3a,3b) von wenigstens 5 mm ermöglicht.

7. Kopplungssystem (1) nach einem der vorhergehenden Ansprüche, bei welchem das Kippelement (13) als Dreh-Kippelement ausgestaltet ist, welches über das Kugelgelenk (15) um die zentrale Kopplungsachse (A) drehbar ist,
wobei eine solche Drehung des Dreh-Kippelements zu einer Torsion der Seilabschnitte (17) um die zentrale Kopplungsachse (A) führt.

8. Kopplungssystem (1) nach einem der vorhergehenden Ansprüche, bei welchem die Anzahl n der Seilabschnitte 2, 3 oder 4 beträgt und diese Seilabschnitte (17) symmetrisch um die zentrale Kopplungsachse (A) verteilt sind.

9. Kopplungssystem (1) nach einem der vorhergehenden Ansprüche, welches eine Mehrzahl s von mechanisch zueinander parallel geschalteten Hauptfederelementen (7) aufweist.

10. Kopplungssystem (1) nach einem der vorhergehenden Ansprüche, bei welchem das wenigstens eine Hauptfederelement (7) eine Gasdruckfeder ist.

11. Kopplungssystem (1) nach einem der vorhergehenden Ansprüche, welches ein Flaschenzugsystem (31) aufweist, durch welches eine Wegübersetzung zwischen dem Federweg des wenigstens einen Hauptfederelements und dem Weg der resultierenden axialen Relativbewegung der beiden Verbindungselemente (3a,3b) gegeben ist.

12. Kopplungssystem (1) nach Anspruch 11, bei welchem das Verhältnis i zwischen dem Weg der axialen Relativbewegung der beiden Verbindungselemente und dem Federweg des Hauptfederelements wenigstens 2 beträgt.

13. Kopplungssystem (1) nach Anspruch 11 oder 12, bei welchem die n Seilabschnitte (17) des lateralen Ausgleichssystems (11) jeweils Teile des Flaschenzugsystems (31) bilden.

14. Kopplungssystem (1) nach einem der Ansprüche 11 bis 13, bei welchem das Flaschenzugsystem (31) mit wenigstens einem zusätzlichen Flaschenzugseil (35) aufgebaut ist.

15. Kopplungssystem (1) nach einem der vorhergehenden Ansprüche, welches zusätzlich ein Notlauf-Federelement (9) umfasst, welches mechanisch parallel oder in Serie zu dem wenigstens einen Hauptfederelement (7) angeordnet ist.
